# EUROPÄISCHE PATENTSCHRIFT

(11) **EP 2 735 657 B1**
(45) Veröffentlichungstag und Bekanntmachung des Hinweises auf die Patenterteilung: **10.08.2022**
(21) Anmeldenummer: 13191528.2
(22) Anmeldetag: 05.11.2013
(51) Int. Cl.: B60K 6/12, B66F 9/22, E02F 9/22, F02N 7/00, F02N 7/08, F02N 11/08, F15B 1/02, F15B 1/033, B60W 20/19

(54) **Antriebsstrang eines Fahrzeugs, inbesondere einer mobilen Arbeitsmaschine**
Drive train of a vehicle, especially a mobile working machine
Chaîne cinématique d'un véhicule, notamment d'une machine de travail mobile

(30) Priorität: 22.11.2012 DE 102012111296
(43) Veröffentlichungstag der Anmeldung: 28.05.2014
(73) Patentinhaber: Linde Hydraulics GmbH & Co. KG, 63743 Aschaffenburg (DE)
(72) Erfinder: Krittian, Lukas, 63739 Aschaffenburg (DE); Steigerwald, Martin, 63864 Glattbach (DE); Oberhäußer, Martin, 63743 Aschaffenburg (DE); Langen, Dr., Alfred, 63762 Großostheim (DE)
(74) Vertreter: Patentship Patentanwaltgesellschaft

(56) Entgegenhaltungen:
- WO-A1-2008/009950
- WO-A1-2011/140972
- WO-A2-2011/041410
- DE-A1- 2 542 244
- DE-A1-102011 104 919
- JP-A- 2007 224 737

## Beschreibung

Die Erfindung betrifft einen Antriebsstrang eines Fahrzeugs, insbesondere einer mobilen Arbeitsmaschine, mit einem Verbrennungsmotor und einem von dem Verbrennungsmotor angetriebenen Arbeitshydrauliksystem, wobei das Arbeitshydrauliksystem Arbeitsfunktionen der Arbeitsmaschine umfasst und mindestens eine von dem Verbrennungsmotor angetriebene Hydraulikpumpe aufweist, die als Pumpe und Motor betreibbar ist, wobei die Hydraulikpumpe im Pumpenbetrieb mit einer Saugseite Druckmittel aus einem Behälter ansaugt und in eine zu dem Arbeitshydrauliksystem geführte Förderleitung fördert und wobei der Hydraulikpumpe im Motorbetrieb an der Saugseite Druckmittel aus einem Druckmittelspeicher zuführbar ist.

Mobile selbstfahrende Arbeitsmaschinen, insbesondere Flurförderzeuge, Landmaschinen, Forstmaschinen und Baumaschinen, beispielsweise Bagger, Rad- und Teleskoplader, Schlepper, Mähdrescher, Feldhäcksler, Zuckerrüben- oder Kartoffelroder, weisen einen Antriebsstrang mit einem Verbrennungsmotor auf, der einen Fahrantrieb und ein Arbeitshydrauliksystem für die Arbeitsfunktionen der Arbeitsmaschine antreibt. Zur Versorgung des Arbeitshydrauliksystems mit Druckmittel ist mindestens eine von dem Verbrennungsmotor angetriebene Hydraulikpumpe vorgesehen.

Während eines Leerlaufbetriebs, in dem der Fahrantrieb und das Arbeitshydrauliksystem nicht betätigt sind und somit von dem Verbrennungsmotor keine Drehmomentanforderung angefordert wird, wird der Verbrennungsmotor auf einer unteren Leerlaufdrehzahl betrieben. Ein derartiger Leerlaufbetrieb findet in Arbeitspausen oder während Arbeitsunterbrechungen statt.

Um den Kraftstoffverbrauch während Arbeitspausen oder Arbeitsunterbrechungen zu verringern, ist es bereits bekannt, eine sogenannte Start-Stopp Funktion für den Verbrennungsmotor vorzusehen, bei der der unbelastete Verbrennungsmotor in Arbeitspausen oder bei Arbeitsunterbrechungen abgeschaltet wird und bei einer Drehmomentanforderung durch eine Arbeitsfunktion oder den Fahrantrieb automatisch wieder gestartet wird. Das Abschalten und der nachfolgende Neustart des Verbrennungsmotors erfolgt hierbei auch bei relativ kurzen Leerlaufzeiten, so dass der Startvorgang des Verbrennungsmotors entsprechend häufig im Betrieb der Arbeitsmaschine auftritt. Dies stellt hohe Anforderungen an die Startereinrichtung des Verbrennungsmotors hinsichtlich der Dauerfestigkeit und der Bereitstellung der erforderlichen Startenergie zum Starten des Verbrennungsmotors.

Bei Verbrennungsmotoren, beispielsweise Diesel- oder Ottomotoren, werden in der Regel elektromotorisch betriebene Startereinrichtungen eingesetzt, mit denen zum Start des abgestellten Verbrennungsmotor die zum Selbstlauf des Verbrennungsmotors benötigte Drehzahl mit einem elektrischen Startermotor erzeugt wird, der über ein Getriebe mit der Kurbelwelle des Verbrennungsmotors verbunden ist. Das Getriebe ist in der Regel von einem Ritzel an der Abtriebswelle des elektrischen Startermotors und einem Zahnkranz an der Kurbelwelle des Verbrennungsmotors gebildet und weist ein hohes Übersetzungsverhältnis auf, so dass ein schnelllaufender und klein bauender elektrischer Startermotor verwendet werden kann.

Bei bekannten elektromotorisch betriebenen Startereinrichtungen mit einem schnelllaufenden und klein bauenden elektrischen Startermotor fließen zum Starten des Verbrennungsmotors kurzzeitig sehr hohe Ströme, um das zum Starten des Verbrennungsmotors erforderliche Drehmoment aufzubringen. Die zum Starten des Verbrennungsmotors auftretenden Ströme haben einen erheblichen Temperaturanstieg zufolge. Sofern der Verbrennungsmotor für eine Start-Stopp Funktion in kurzen Intervallen gestartet werden soll, führt dieses Betriebsverhalten bekannter elektromotorisch betriebener Startereinrichtungen zu einem Überhitzen und somit zu einem Ausfall des elektrischen Startermotors und somit der elektromotorisch betriebenen Startereinrichtung. Um eine derartige konventionelle elektromotorisch betriebene Startereinrichtung mit einem elektrischen Startermotor für eine Start-Stopp-Funktion in kurzen Intervallen betätigen zu können, ist das Spannungsniveau der elektrischen Spannung anzuheben und der elektrische Startermotor entsprechend dauerfest auszuführen, wodurch jedoch der Bauaufwand und der Herstellungsaufwand stark ansteigen.

Bei mobilen Arbeitsmaschinen erfordert zudem während des Startvorgangs des Verbrennungsmotors die im Antriebsstrang angeordnete Hydraulikpumpe des Arbeitshydrauliksystems zusätzliche Energie. Bereits vorhandene elektromotorische, getriebeuntersetzte Starteinrichtungen des Verbrennungsmotors sind daher nicht geeignet, eine Start-Stopp Funktion mit entsprechender Dauerfestigkeit und der erforderlicher Startenergie in wirtschaftlicher Weise herzustellen.

Bei gattungsgemäßen Antriebssträngen einer mobilen Arbeitsmaschine werden daher hydrostatische Triebwerke als hydraulische Starter des Verbrennungsmotors für eine Start-Stopp-Funktion eingesetzt, die mit der Kurbelwelle des Verbrennungsmotors trieblich verbunden sind und mit Druckmittel aus einem Druckmittelspeicher bei einem Startvorgang des Verbrennungsmotors betrieben werden.

Aus der DE 10 2011 105 006 A1 ist ein Antriebsstrang bekannt, bei dem zusätzlich zu der Hydraulikpumpe des Arbeitshydrauliksystems ein weiterer Hydraulikmotor als Starter des Verbrennungsmotors für eine Start-Stopp-Funktion des Verbrennungsmotors vorgesehen ist. Da ein derartiger zusätzlicher Hydraulikmotor im Antriebsstrang im normalen Betrieb von dem laufenden Verbrennungsmotor mitgeschleppt wird, entstehen Verluste, die den Gesamtwirkungsgrad der Arbeitsmaschine herabsetzen.

Um den Aufwand für einen zusätzlichen Hydraulikmotor als Starter des Verbrennungsmotors zu vermeiden, ist es aus gattungsähnlichen Antriebssträngen mit einer Start-Stopp-Funktion bekannt, die bereits vorhandene Hydraulikpumpe des Arbeitshydrauliksystems als hydraulischen Starter des Verbrennungsmotors zu nutzen, in dem die Hydraulikpumpe als Motor betrieben wird, der Druckmittel aus einem Druckmittelspeicher an der Saugseite zugeführt wird. Ein derartiger Antriebsstrang ist aus der EP 2 308 795 A1 bekannt. Die Hydraulikpumpe, beispielsweise eine Axialkolbenmaschine, des Arbeitshydrauliksystems bekannter Antriebsstränge ist in der Regel auf eine hohe Sauggrenzdrehzahlen im Pumpenbetrieb ausgelegt. Die im Pumpenbetrieb mit dem Behälter verbundene Saugseite mit dem Ansaugkanal weist hierbei einen entsprechend großen Querschnitt auf, wobei in einem Motorbetrieb, bei dem der Druckmittelspeicher mit der Saugseite der Hydraulikpumpe des Arbeitshydrauliksystems verbunden wird, in der Regel das Gehäuse der Hydraulikpumpe nicht über eine ausreichende Festigkeit für hohe Drücke verfügt, so dass die Hydraulikpumpe im Motorbetrieb lediglich mit begrenzten Drücken an der Saugseite betrieben werden. Hierdurch steht im Motorbetrieb der Hydraulikpumpe lediglich ein begrenztes erzeugbares Drehmoment im Antriebsstrang zur Verfügung. Um ein höheres Drehmoment in den Antriebsstrang im Motorbetrieb der Hydraulikpumpe einleiten zu können, könnte die Saugseite und der Ansaugkanal der Hydraulikpumpe hochdruckfest ausgebildet werden, hierdurch sind jedoch aufwändige bauliche Veränderungen an der Hydraulikpumpe erforderlich, die den Bauaufwand der Hydraulikpumpe erhöhen.

Aus der WO 2011/140972 A1 ist ein Antriebsstrang eines Fahrzeugs bekannt, der zwei von einem Verbrennungsmotor angetriebene Hydraulikpumpen zur Versorgung einer Arbeitshydraulik aufweist, die jeweils als Pumpe und Motor betreibbar sind, die im Pumpenbetrieb mit einer Saugseite Druckmittel aus einem Behälter ansaugen und in eine zur Arbeitshydraulik geführten Förderleitung fördern und die im Motorbetrieb an der Saugseite von Druckmittel aus einem Druckmittelspeicher angetrieben werden.

Die WO 2011/041410 A2 offenbart ein Hydrauliksystem mit einem Antriebsmotor und einem von dem Antriebsmotor angetriebenen Arbeitshydrauliksystem, wobei das Arbeitshydrauliksystem Arbeitsfunktionen der Arbeitsmaschine umfasst und mindestens eine von dem Antriebsmotor angetriebene Hydraulikpumpe aufweist, die als Pumpe und Motor betreibbar ist, wobei die Hydraulikpumpe im Pumpenbetrieb mit einer Saugseite Druckmittel aus einem Behälter ansaugt und in eine zu dem Arbeitshydrauliksystem geführte Förderleitung fördert.

Die WO 2008/009950 A1 offenbart ein Hydrauliksystem mit einem Verbrennungsmotor und einem von dem Verbrennungsmotor angetriebenen Arbeitshydrauliksystem, wobei das Arbeitshydrauliksystem Arbeitsfunktionen der Arbeitsmaschine umfasst und mindestens eine von dem Verbrennungsmotor angetriebene Hydraulikpumpe aufweist, die als Pumpe und Motor betreibbar ist, wobei die Hydraulikpumpe im Pumpenbetrieb mit einer Saugseite Druckmittel aus einem Behälter ansaugt und in eine zu dem Arbeitshydrauliksystem geführte Förderleitung fördert. Weiterhin ist ein Druckmittelspeicher vorgesehen, der mit der Förderseite der Hydraulikpumpen verbunden ist.

Der vorliegenden Erfindung liegt die Aufgabe zugrunde, einen Antriebsstrang der eingangs genannten Gattung zur Verfügung zu stellen, bei dem mit geringem baulichen Aufwand ein erhöhtes Drehmoment in den Antriebsstrang eingeleitet werden kann.

Diese Aufgabe wird erfindungsgemäß dadurch gelöst, dass der Antriebsstrang eine von dem Verbrennungsmotor angetriebene Speisepumpe aufweist, die einen Speisekreis versorgt, wobei der Speisekreis eine Speisedruckleitung aufweist, an die Verbraucher des Speiskreises angeschlossen sind, wobei die Speisepumpe als Pumpe und Motor betreibbar ist, die im Pumpenbetrieb mit einer Saugseite Druckmittel aus dem Behälter ansaugt und in die zu einem Speisekreis geführte Speisedruckleitung fördert, wobei der Speisepumpe im Motorbetrieb an der Saugseite Druckmittel aus dem Druckmittelspeicher zuführbar ist, wobei zur Steuerung der Verbindung des Druckmittelspeichers mit der Saugseite der Hydraulikpumpe ein erstes elektrisch betätigbares Steuerventil und zur Steuerung der Verbindung des Druckmittelspeichers mit der Saugseite der Speisepumpe ein zweites elektrisch betätigbares Steuerventil vorgesehen ist. Bei dem erfindungsgemäßen Antriebsstrang sind somit die Hydraulikpumpe des Arbeitshydrauliksystems und die Speisepumpe jeweils als Motor mit Druckmittel aus dem Druckmittelspeicher betreibbar. Durch den erfindungsgemäßen Motorbetrieb der Speisepumpe kann mit geringem zusätzlichen Bauaufwand das in den Antriebsstrang einleitbaren Drehmoment erhöht werden. An der Hydraulikpumpe des Arbeitshydrauliksystems sind hierbei keine aufwändigen Änderungen erforderlich, so dass insgesamt mit geringem Bauaufwand ein hohes Drehmoment in den Antriebsstrang im Motorbetrieb der Hydraulikpumpe und der Speisepumpe eingeleitet werden kann. Da zudem für das Einleiten eines Drehmoments die bereits im Antriebsstrang vorhandene Hydraulikpumpe des Arbeitshydrauliksystems und die bereits im Antriebsstrang vorhandene Speisepumpe verwendet werden, ergeben sich auf Vorteile hinsichtlich des Wirkungsgrades und des Bauraumbedarfs des Antriebsstrang, da keine zusätzlichen mit Druckmittel aus dem Druckmittelspeicher betreibbaren Hydromotoren im Antriebsstrang erforderlich sind, die nur zur Abgabe eines Zusatzdrehmoments in den Antriebsstrang dienen und entsprechende Schleppverluste außerhalb der Abgabe eines Zusatzdrehmoments verursachen. Mit den beiden Steuerventilen wird es auf einfache Weise ermöglicht, den Motorbetrieb der Hydraulikpumpe des Arbeitshydrauliksystems und den Motorbetrieb der Speisepumpe getrennt voneinander mittels jeweils eines Steuerventils zu steuern, so dass auf einfache Weise bei einem Pumpenbetrieb der Hydraulikpumpe des Arbeitshydrauliksystems und somit einer Betätigung des Arbeitshydrauliksystems durch einen Motorbetrieb der Speisepumpe der Verbrennungsmotor mit einem zusätzlichen Drehmoment aus der Speisepumpe unterstützt werden kann. Zudem wird mit getrennten Steuerventilen ermöglicht, das Drehmoment zum Starten des abgestellten Verbrennungsmotors entsprechend dem Startverhalten anzupassen, so dass beispielsweise für einen Kaltstart des Verbrennungsmotors die Hydraulikpumpe zusammen mit der Speisepumpe als Motor betrieben wird und bei einem Warmstart lediglich die Arbeitshydraulikpumpe oder die Speisepumpe als Motor betrieben wird.

Diese Aufgabe wird erfindungsgemäß ebenfalls dadurch gelöst, dass der Antriebsstrang eine von dem Verbrennungsmotor angetriebene Speisepumpe aufweist, die einen Speisekreis versorgt, wobei der Speisekreis eine Speisedruckleitung aufweist, an die Verbraucher des Speiskreises angeschlossen sind, wobei die Speisepumpe als Pumpe und Motor betreibbar ist, die im Pumpenbetrieb mit einer Saugseite Druckmittel aus dem Behälter ansaugt und in die zu einem Speisekreis geführte Speisedruckleitung fördert, wobei der Speisepumpe im Motorbetrieb an der Saugseite Druckmittel aus dem Druckmittelspeicher zuführbar ist, wobei zur Steuerung der Verbindung des Druckmittelspeichers mit der Saugseite der Hydraulikpumpe und zur Steuerung der Verbindung des Druckmittelspeichers mit der Saugseite der Speisepumpe ein gemeinsames elektrisch betätigbares Steuerventil vorgesehen ist, das in einer von dem Druckmittelspeicher zu einem gemeinsamen Ansaugkanal der Hydraulikpumpe und der Speisepumpe geführten Verbindungsleitung angeordnet, wobei der gemeinsame Ansaugkanal die Saugseite der Hydraulikpumpe und die Saugseite der Speisepumpe mit dem Behälter verbindet. Bei dem erfindungsgemäßen Antriebsstrang sind somit die Hydraulikpumpe des Arbeitshydrauliksystems und die Speisepumpe jeweils als Motor mit Druckmittel aus dem Druckmittelspeicher betreibbar. Durch den erfindungsgemäßen Motorbetrieb der Speisepumpe kann mit geringem zusätzlichen Bauaufwand das in den Antriebsstrang einleitbaren Drehmoment erhöht werden. An der Hydraulikpumpe des Arbeitshydrauliksystems sind hierbei keine aufwändigen Änderungen erforderlich, so dass insgesamt mit geringem Bauaufwand ein hohes Drehmoment in den Antriebsstrang im Motorbetrieb der Hydraulikpumpe und der Speisepumpe eingeleitet werden kann. Da zudem für das Einleiten eines Drehmoments die bereits im Antriebsstrang vorhandene Hydraulikpumpe des Arbeitshydrauliksystems und die bereits im Antriebsstrang vorhandene Speisepumpe verwendet werden, ergeben sich auf Vorteile hinsichtlich des Wirkungsgrades und des Bauraumbedarfs des Antriebsstrang, da keine zusätzlichen mit Druckmittel aus dem Druckmittelspeicher betreibbaren Hydromotoren im Antriebsstrang erforderlich sind, die nur zur Abgabe eines Zusatzdrehmoments in den Antriebsstrang dienen und entsprechende Schleppverluste außerhalb der Abgabe eines Zusatzdrehmoments verursachen. Mit einem gemeinsamen Steuerventil kann der Motorbetrieb der Hydraulikpumpe und der Motorbetrieb der Speisepumpe mit geringem Bauaufwand gemeinsam gesteuert werden. Bei einem Antriebsstrang, bei dem aufgrund einer entsprechenden Begrenzung des an der Saugseite der Hydraulikpumpe im Motorbetrieb möglichen Druckes kein ausreichendes Drehmoment zum Starten des abgestellten Verbrennungsmotors erzielt werden kann, wird mit dem Motorbetrieb der Speisepumpe und einem gemeinsamen Steuerventil zur Steuerung des Motorbetriebs der Hydraulikpumpe und der Speisepumpe mit geringem Bauaufwand ermöglicht, ein ausreichendes Drehmoment zum Starten des abgestellten Verbrennungsmotor zu erzeugen. Durch einen gemeinsamen Ansaugkanal für die Hydraulikpumpe und die Speisepumpe wird der Bauaufwand für die als Motoren betreibbaren beiden Pumpen weiter verringert.

Gemäß einer vorteilhaften Ausführungsform der Erfindung ist die Hydraulikpumpe als hydraulischer Starter zum Starten des Verbrennungsmotors bei einer Start-Stopp-Funktion ausgebildet ist. Mit dem Motorbetrieb der Hydraulikpumpe, in dem die Hydraulikpumpe mit Druckmittel aus dem Druckspeicher angetrieben wird, kann auf einfache Weise ein hydraulischer Starter zum Starten des Verbrennungsmotors gebildet werden, um eine Start-Stopp-Funktion zu erzielen.

Die Speisepumpe ist gemäß einer vorteilhaften Weiterbildung der Erfindung als hydraulischer Starter zum Starten des Verbrennungsmotors bei einer Start-Stopp-Funktion und/oder als Booster-Antrieb zur Unterstützung des laufenden Verbrennungsmotors ausgebildet. Mit dem Motorbetrieb der erfindungsgemäßen Speisepumpe kann das Drehmoment für einen Startvorgang auf einfache Weise erhöht werden, um beispielsweise bei einem Kaltstart ein ausreichendes Drehmoment für den Start des abgestellten Verbrennungsmotors zu erzielen oder bei einer entsprechenden Begrenzung des an der Saugseite der Hydraulikpumpe im Motorbetrieb möglichen Druckes ein ausreichendes Drehmoment zum Starten des abgestellten Verbrennungsmotor zu erzeugen. Zudem kann mit einer derartigen als Motor betreibbaren Speisepumpe ein Booster-Antrieb erzielt werden und ein zusätzliches Drehmoment in den Antriebsstrang eingeleitet werden, mit dem der laufende Verbrennungsmotor bei einem Beschleunigungsvorgang oder im Fahrbetrieb des Fahrzeugs bei stationärer Fahrt mit einer Zielgeschwindigkeit sowie bei der Betätigung des Arbeitshydrauliksystems unterstützt werden kann. Der von der Speisepumpe gebildete hydrostatische Booster-Antrieb ermöglicht eine Kraftstoffeinsparung des Verbrennungsmotors und ein Downsizing des Verbrennungsmotors.

Das erste Steuerventil ist bevorzugt in einer von dem Druckmittelspeicher zu einer Ansaugleitung der Hydraulikpumpe geführten Verbindungsleitung angeordnet ist, wobei die Ansaugleitung von dem Behälter zur Saugseite der Hydraulikpumpe geführt ist.

Sofern in der von dem Behälter zur Saugseite der Hydraulikpumpe geführten Ansaugleitung ein in Richtung zum Behälter sperrendes Sperrventil, insbesondere ein in Richtung zum Behälter sperrendes Rückschlagventil, angeordnet ist, kann auf einfache Weise im Motorbetrieb der Hydraulikpumpe ein Abströmen des Druckmittels aus dem Druckmittelspeicher in den Behälter vermieden werden und im Pumpenbetrieb der Hydraulikpumpe eine Ansaugen von Druckmittel aus dem Behälter erzielt werden.

Das zweite Steuerventil ist bevorzugt in einer von dem Druckmittelspeicher zu einer Ansaugleitung der Speisepumpe geführten Verbindungsleitung angeordnet ist, wobei die Ansaugleitung von dem Behälter zur Saugseite der Speisepumpe geführt ist.

Sofern hierbei in der von dem Behälter zur Saugseite der Speisepumpe geführten Ansaugleitung ein in Richtung zum Behälter sperrendes Sperrventil, insbesondere ein in Richtung zum Behälter sperrendes Rückschlagventil, angeordnet ist, kann auf einfache Weise im Motorbetrieb der Speisepumpe ein Abströmen des Druckmittels aus dem Druckmittelspeicher in den Behälter vermieden werden und im Pumpenbetrieb der Speisepumpe eine Ansaugen von Druckmittel aus dem Behälter erzielt werden.

Die Ausbildung eines gemeinsamen Ansaugkanals für die Hydraulikpumpe des Arbeitshydrauliksystems und der Speisepumpe ermöglicht es, in dem gemeinsamen Ansaugkanal ein in Richtung zum Behälter sperrendes Sperrventil, insbesondere ein in Richtung zum Behälter sperrendes Rückschlagventil, anzuordnen. Somit ist lediglich ein einziges Sperrventil in dem gemeinsamen Ansaugkanal erforderlich, um sicherzustellen, dass im gemeinsamen Motorbetrieb der Hydraulikpumpe und der Speisepumpe ein Abströmen des Druckmittels aus dem Druckmittelspeicher in den Behälter vermieden wird und im Pumpenbetrieb die Hydraulikpumpe sowie die Speisepumpe Druckmittel aus dem Behälter ansaugen können.

Der Druckmittelspeicher ist gemäß einer vorteilhaften Ausgestaltungsform der Erfindung zum Laden an die Förderleitung anschließbar, wobei an die zu dem Arbeitshydrauliksystem geführte Förderleitung der Hydraulikpumpe eine zu dem Druckmittelspeicher geführte Druckmittelleitung angeschlossen ist. Hierdurch wird auf einfache Weise ein Laden des Druckmittelspeichers mit Druckmittel ermöglicht, das von der im Pumpenbetrieb betriebenen Hydraulikpumpe des Arbeitshydrauliksystems in die Förderleitung gefördert wird.

In der Druckmittelleitung ist zweckmäßigerweise ein Sperrventil angeordnet. Mit einem derartigen Sperrventil kann auf einfache Weise in der Öffnungsstellung des Sperrventils der Druckmittelspeicher mit Druckmittel aufgeladen werden und nach dem Ladevorgang der mit Druckmittel aufgeladene Druckmittelspeicher in der Sperrstellung des Sperrventils abgesperrt werden.

Das Sperrventil ist gemäß einer vorteilhaften Ausgestaltungsform der Erfindung als selbsttätig und druckabhängig in Richtung zum Druckmittelspeicher öffnendes Rückschlagventil ausgebildet. Ein derartiges Rückschlagventil weist einen geringen Bauaufwand auf und ermöglich es, den Druckmittelspeicher über die Förderleitung mit Druckmittel zu laden und nach dem Ladevorgang den Druckmittelspeicher abzusperren.

Das Laden des Druckmittelspeichers kann bei einer Betätigung eines hydraulischen Verbrauchers des Arbeitshydrauliksystems erfolgen. Um zu erzielen, dass dem betätigten Verbraucher beim gleichzeitigen Laden des Druckmittelspeichers ein ausreichender Volumenstrom zufließt und somit der betätigte Verbraucher mit einer gewünschten Bewegungsgeschwindigkeit betrieben wird, ist gemäß einer vorteilhaften Weiterbildung der Erfindung in der Druckmittelleitung eine Drosseleinrichtung, insbesondere eine Blende oder Drossel, angeordnet. Mit einer derartigen, als Drossel oder Blende ausgebildeten Drosseleinrichtung in der zu dem Druckmittelspeicher geführten Druckmittelleitung kann auf einfache Weise in Verbindung mit einem einfach aufgebauten Rückschlagventil in der Druckmittelleitung der Ladevolumenstrom in den Druckmittelspeicher begrenzt werden.

Gemäß einer alternativen Ausgestaltungsform der Erfindung ist das Sperrventil als elektrisch betätigbares Steuerventil mit einer Sperrstellung und einer Durchflussstellung ausgebildet. Mit einem derartigen elektrisch betätigbaren Steuerventil wird ebenfalls auf günstige Weise ermöglicht, den Druckmittelspeicher über die Förderleitung mit Druckmittel zu laden und nach dem Ladevorgang den Druckmittelspeicher abzusperren, wobei das Steuerventil weiterhin durch entsprechende Ansteuerung ermöglicht, den Ladevolumenstrom in den Druckmittelspeicher bei entsprechenden Betriebszuständen zu begrenzen.

Sofern gemäß einer Weiterbildung der Erfindung dem Druckmittelspeicher ein Drucksensor zugeordnet ist, kann auf einfache Weise in Verbindung mit einer ein Ladeventil steuernden elektronischen Steuereinrichtung der Ladevorgang des Druckmittelspeichers sowie die Verbindung mit dem Steuerventil bzw. den Steuerventilen der Entladebetrieb des Druckmittelspeichers gesteuert werden.

Gemäß einer Weiterbildung der Erfindung ist in der zu dem Arbeitshydrauliksystem geführten Förderleitung der Hydraulikpumpe ein die Förderleitung drosselndes Ladeventil zum Laden des Druckmittelspeichers angeordnet und ist die Druckmittelleitung stromauf des Ladeventils an die Förderleitung angeschlossen. Mit einem derartigen Ladeventil kann auch in Betriebszuständen, in denen kein Verbraucher des Arbeitshydrauliksystems betätigt ist, die Förderleitung angedrosselt werden, um ein Laden des Druckmittelspeichers durch den von der Hydraulikpumpe im Pumpenbetrieb geförderten Förderstrom zu ermöglichen.

Besondere Vorteile ergeben sich, wenn das Ladeventil gemäß einer Ausführungsform der Erfindung als Retarderventil ausgebildet ist, das im Bremsbetrieb des Fahrzeugs in eine die Förderleitung drosselnde Drosselstellung betätigt ist. Mit einem derartigen Retarderventil kann durch eine Drosselung der Förderleitung der Hydraulikpumpe in einem Bremsbetrieb des Fahrzeugs ein zusätzliches, abbremsendes Drehmoment an der von der Kurbelwelle gebildeten Abtriebswelle aufgeprägt werden, welches dem motorisch wirkenden Drehmoment an der Fahrpumpe entgegenwirkt, und so das Fahrzeug abbremst. In einem derartigen Bremsbetrieb bei drosselndem Retarderventil kann zudem auf einfache Weise eine Energierückgewinnung erfolgen und der Druckmittelspeicher geladen werden, so dass zum Laden des Druckmittelspeichers die kinetische Energie des Fahrzeugs während eines Bremsvorgangs dient.

Gemäß einer Weiterbildung der Erfindung ist die Hydraulikpumpe zur Versorgung einer hydraulischen Lenkungsvorrichtung vorgesehen und ist der Förderseite der Hydraulikpumpe ein Prioritätsventil zur bevorzugten Versorgung der Lenkungshydraulik zugeordnet, an das ausgangsseitig die Förderleitung des Arbeitshydrauliksystem angeschlossen ist. Mit der Hydraulikpumpe kann mit einem derartigen Prioritätsventil auf einfache Weise die bevorzugte Versorgung einer Lenkungseinrichtung ermöglicht werden, wobei durch den Anschluss der Verbindungsleitung des Druckmittelspeichers an die von dem Prioritätsventil zum Arbeitshydrauliksystem geführte Förderleitung der Ladevorgang des Druckmittelspeichers keine Einflüsse auf die Priorisierung und die Priorität der Lenkungseinrichtung hat.

Zum Starten des Verbrennungsmotors wird bevorzugt die Hydraulikpumpe und/oder die Speisepumpe im Motorbetrieb betrieben. Je nach erforderlichem Drehmoment zum Starten des abgestellten Verbrennungsmotor kann allein der Hydraulikmotor oder der Hydraulikmotor zusammen mit der Speisepumpe im Motorbetrieb betrieben werden, um eine für den Startvorgang des Verbrennungsmotors ausreichendes Drehmoment im Antriebsstrang zur Verfügung zu stellen.

Für einen Booster-Antrieb bei laufendem Verbrennungsmotor wird vorteilhafterweise die Speisepumpe in einem Motorbetrieb betrieben. Da in der Regel die Speisepumpe gegenüber der Hydraulikpumpe ein geringeres Verdrängervolumen aufweist, wird es mit dem Motorbetrieb der Speisepumpe ermöglicht, bei laufendem Verbrennungsmotor über einen längeren Zeitraum in den Antriebsstrang ein Zusatzdrehmoment einzuspeisen, so dass mit dem Boost-Antrieb der Speisepumpe eine Verringerung des Kraftstoffverbrauchs des Verbrennungsmotors erzielbar ist oder der Boost-Antrieb der Speisepumpe zum Down-Sizing des Verbrennungsmotors genutzt werden kann.

Die Hydraulikpumpe des Arbeitshydrauliksystems kann als Konstantpumpe mit einem festen Verdrängervolumen oder als Verstellpumpe mit einem verstellbaren Verdrängervolumen ausgebildet sein.

Die Hydraulikpumpe des Arbeitshydrauliksystems ist zweckmäßigerweise als Axialkolbenmaschine, bevorzugt als Axialkolbenmaschine in Schrägscheibenbauweise, oder als Radialkolbenmaschine oder als Zahnradmaschine ausgebildet.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform eines erfindungsgemäßen Antriebsstrangs in einer schematischen Darstellung,
- Figur 2: eine zweite Ausführungsform eines erfindungsgemäßen Antriebsstrangs in einer schematischen Darstellung und
- Figur 3: eine alternative Ausgestaltung der Figur 2.

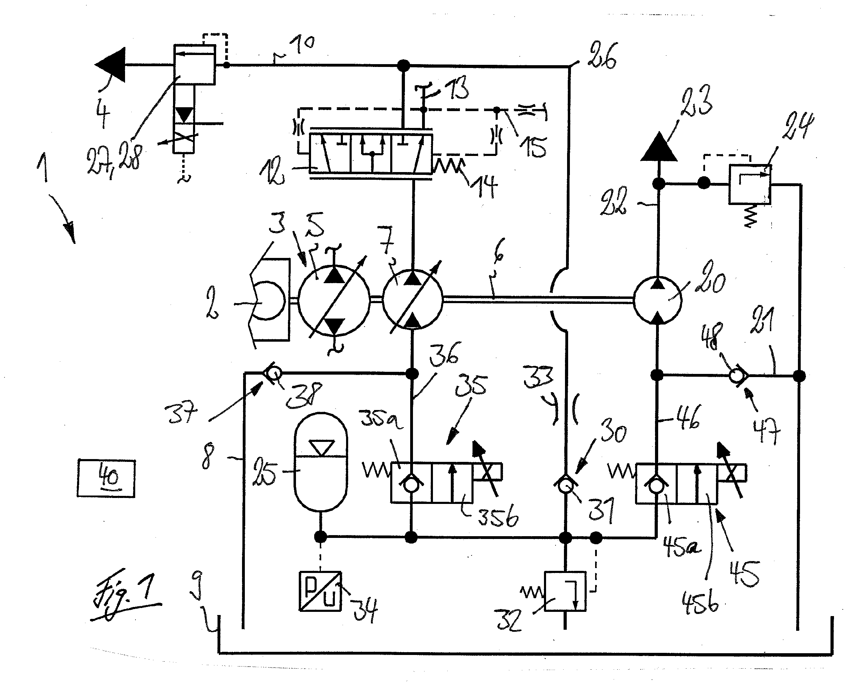

In der Figur 1 ist ein erfindungsgemäßer Antriebsstrang 1 einer nicht näher dargestellten mobilen Arbeitsmaschine, beispielsweise eines Flurförderzeugs oder einer Bau- bzw. Landmaschine, in einer Prinzipdarstellung dargestellt.

Der erfindungsgemäße Antriebsstrang 1 besteht aus einem Verbrennungsmotor 2, beispielsweise einem Dieselmotor, einem von dem Verbrennungsmotor 2 angetriebenen Fahrantrieb 3 des Fahrzeugs sowie einem von dem Verbrennungsmotor 2 angetriebenen Arbeitshydrauliksystem 4.

Der Fahrantrieb 3 ist im dargestellten Ausführungsbeispiel als hydrostatischer Fahrantrieb ausgebildet, der aus einer im Fördervolumen verstellbaren Fahrpumpe 5 besteht, die zum Antrieb mit einer Abtriebswelle 6 des Verbrennungsmotors 2 in trieblicher Verbindung steht. Die Fahrpumpe 5 steht mit einem oder mehreren im Schluckvolumen festen oder verstellbaren, nicht näher dargestellten Hydromotoren im geschlossenen Kreislauf in Verbindung, die auf nicht mehr dargestellte Weise mit den angetriebenen Rädern der Arbeitsmaschine in Wirkverbindung stehen.

Der Fahrantrieb 3 kann alternativ als elektrischer Fahrantrieb mit einem von dem Verbrennungsmotor 2 angetriebenen elektrischen Generator und einem oder mehreren elektrischen Fahrmotoren gebildet werden. Zudem kann als Fahrantrieb ein mechanischer Fahrantrieb mit einem mechanischen Getriebe, beispielsweise einem Stufenschaltgetriebe oder einem Leistungsverzweigungsgetriebe oder einem Drehmomentwandlergetriebe, vorgesehen werden.

Das Arbeitshydrauliksystem 4 umfasst Arbeitsfunktionen der Arbeitsmaschine, beispielsweise bei einem Flurförderzeug eine Arbeitshydraulik zum Betätigen eines Lastaufnahmemittels an einem Hubmast, bzw. bei einer beispielsweise als Bagger ausgebildeten Baumaschine die Arbeitsfunktionen der von einer Schaufel ausgebildeten Arbeitsausrüstung.

Das Arbeitshydrauliksystem 4 umfasst im dargestellten Ausführungsbeispiel mindestens eine im offenen Kreislauf betriebene Hydraulikpumpe 7, die zum Antrieb mit der Abtriebswelle 6 des Verbrennungsmotors 2 in trieblicher Verbindung steht. Die Hydraulikpumpe 7 des Arbeitshydrauliksystems 4 ist in dem Ausführungsbeispiel der Figur 1 als Verstellpumpe mit einem veränderbaren Verdrängervolumen ausgebildet, beispielsweise als Axialkolbenmaschine in Schrägscheibenbauweise. Die Hydraulikpumpe 7 des Arbeitshydrauliksystems 4 kann alternativ als Konstantpumpe mit einem konstanten Verdrängervolumen ausgebildet werden.

Die Hydraulikpumpe 7 steht eingangsseitig mit der Saugseite mittels einer Ansaugleitung 8 mit einem Behälter 9 in Verbindung. Eine ausgangsseitig mit der Förderseite der Hydraulikpumpe 7 in Verbindung stehende Förderleitung 10 ist an eine nicht näher dargestellte Steuerventileinrichtung angeschlossen, mittels der die nicht näher dargestellten hydraulischen Verbraucher des Arbeitshydrauliksystems 4 steuerbar sind. Die Steuerventileinrichtung umfasst bevorzugt ein oder mehrere Wegeventile zur Betätigung der Verbraucher. Im dargestellten Ausführungsbeispiel ist weiterhin ein Prioritätsventil 12 dargestellt, mit dem die bevorzugte Versorgung eines von der Hydraulikpumpe 7 versorgten Verbrauchers, beispielsweise einer hydraulischen Lenkungseinrichtung, sichergestellt werden kann. Das Prioritätsventil 12 ist eingangsseitig mit der Förderseite der Hydraulikpumpe 7 verbunden und steht ausgangsseitig mit der zu dem Arbeitshydrauliksystem 4 geführten Förderleitung 10 sowie einer zu der Lenkungseinrichtung geführten Förderleitung 13 in Verbindung. Das Prioritätsventil 12 ist von einer Feder 14 sowie dem in einer Lastdruckleitung 15 anstehenden Lastdruck der Lenkungseinrichtung gesteuert.

Der Antriebsstrang 1 umfasst weiterhin eine Speisepumpe 20, die zum Antrieb mit der Abtriebswelle 6 in Verbindung steht. Die Speisepumpe 20 ist als Konstantpumpe mit einem konstanten Verdrängervolumen ausgebildet, die im offenen Kreislauf betrieben ist. Die Speisepumpe 20 steht hierzu mit der Saugseite über eine Ansaugleitung 21 mit dem Behälter 9 in Verbindung und fördert in eine an die Förderseite angeschlossene Speisedruckleitung 22, an die die entsprechenden Verbraucher eines Speisekreises 23 angeschlossen sind, beispielsweise Verstelleinrichtungen zur Verstellung des Verdrängervolumens der Fahrpumpe 5 und der Hydraulikpumpe 7, eine Einspeisevorrichtung des hydrostatischen Fahrantriebs, eine Bremsanlage des Fahrzeugs und Vorsteuerventile für die Steuerventile des Arbeitshydrauliksystems 4. Zur Absicherung des Speisedruckes in dem Speisedruckkreis 23 ist der Speisedruckleitung 22 eine Druckbegrenzungseinrichtung 24, beispielsweise ein Druckbegrenzungsventil, zugeordnet.

Bei dem erfindungsgemäßen Antriebsstrang 1 ist die Hydraulikpumpe 7 des Arbeitshydrauliksystems 4 als Zweiquadrantentriebwerk ausgebildet, das bei gleicher Drehrichtung und gleicher Durchflussrichtung des Druckmittels als Pumpe und Motor betreibbar ist.

Im Pumpenbetrieb saugt die Hydraulikpumpe 7 über die Ansaugleitung 8 Druckmittel aus dem Behälter 9 an und fördert das Druckmittel über das Prioritätsventil 12 in die Förderleitung 10 des Arbeitshydrauliksystems 4 bzw. die Förderleitung 13 der Lenkungseinrichtung. Im Motorbetrieb der Hydraulikpumpe 7, in der die Hydraulikpumpe 7 als hydraulischer Starter einer Start-Stopp-Funktion zum Starten des Verbrennungsmotors 2 ausgebildet ist, wird die Hydraulikpumpe 7 an der Saugseite mit Druckmittel aus einem Druckmittelspeicher 25 angetrieben.

Der Druckmittelspeicher 25 ist zum Laden mit Druckmittel an die zu dem Arbeitshydrauliksystem 4 geführte Förderleitung 10 der Hydraulikpumpe 7 mittels einer Druckmittelleitung 26 angeschlossen.

In der Förderleitung 10 ist ein elektrisch betätigbares Ladeventil 27 angeordnet, das bei einer Ansteuerung in eine die Förderleitung 10 drosselnde Drosselstellung zum Aufstauen eines Druckes betätigbar ist. Das Ladeventil 27 ist bevorzugt als Retarderventil 28 ausgeführt, das im Bremsbetrieb des Fahrzeugs in eine Drosselstellung betätigt wird, um durch Aufstauen eines Druckes in der Förderleitung 10 ein zusätzliches, abbremsendes Drehmoment an der von der Kurbelwelle gebildeten Abtriebswelle 6 aufzuprägen, welches dem motorisch wirkenden Drehmoment an der Fahrpumpe 5 entgegenwirkt und so das Fahrzeug abbremst. Die Druckmittelleitung 26 ist hierbei stromauf des Ladeventils 27 und somit zwischen dem Ladeventil 27 und dem Prioritätsventil 12 an die Förderleitung 10 angeschlossen.

In der Druckmittelleitung 26 ist ein Sperrventil 30 angeordnet, das im dargestellten Ausführungsbeispiel als selbsttätig und druckabhängig in Richtung zum Druckmittelspeicher 25 öffnendes Rückschlagventil 31 ausgebildet ist. Weiterhin ist der Druckmittelleitung 26 zwischen dem Sperrventil 30 und dem Druckmittelspeicher 25 ein Druckbegrenzungsventil 32 zur Absicherung des Druckes in dem Druckmittelspeicher 25 zugeordnet. In der Druckmittelleitung 26 ist weiterhin zur Begrenzung des Ladevolumenstroms des Druckmittelspeichers 25 eine Drosseleinrichtung 33 angeordnet, die als Blende oder Drossel ausgeführt sein kann. Die Drosseleinrichtung 33 kann hierbei - wie dargestellt - stromauf des Sperrventils 30 oder alternativ stromab des Sperrventils 30 angeordnet sein.

Der Druckmittelleitung 26 zwischen dem Sperrventil 30 und dem Druckmittelspeicher 25 ist weiterhin ein Drucksensor 34 zugeordnet. Der Drucksensor 34 dient zur Überwachung des Ladedruckes und somit des Ladezustands des Druckmittelspeichers 25.

Die Verbindung des Druckmittelspeichers 25 mit der Saugseite der Hydraulikpumpe 7 für den Motorbetrieb der Hydraulikpumpe 7 ist mittels eines ersten elektrisch betätigbaren Steuerventils 35 steuerbar. Das Steuerventil 35 weist eine Sperrstellung 35a und eine Durchflussstellung 35b auf, wobei die Sperrstellung 35a bevorzugt leckagedicht ausgeführt ist mit einem in Richtung zur Hydraulikpumpe 7 sperrenden Sperrventil.

Das Steuerventil 35 ist in einer Verbindungsleitung 36 angeordnet, die von der Druckmittelleitung 26 zwischen dem Sperrventil 30 und dem Druckmittelspeicher 25 zu der zur Saugseite der Hydraulikpumpe 7 geführten Ansaugleitung 8 geführt ist.

In der Ansaugleitung 8 der Hydraulikpumpe 7 ist ein in Richtung zum Behälter 9 sperrendes Sperrventil 37 angeordnet, das bevorzugt als ein in Richtung zum Behälter sperrendes Rückschlagventil 38 ausgebildet ist.

Bei dem erfindungsgemäßen Antriebsstrang 1 ist weiterhin die Speisepumpe 20 als Zweiquadrantentriebwerk ausgebildet, das bei gleicher Drehrichtung und gleicher Durchflussrichtung des Druckmittels als Pumpe und Motor betreibbar ist.

Im Pumpenbetrieb saugt die Speisepumpe 20 mit der an die Saugseite angeschlossenen Ansaugleitung 21 Druckmittel aus dem Behälter 9 an und fördert in die Speisedruckleitung 22, die mit der Förderseite der Speisepumpe 20 verbunden ist. Im Motorbetrieb der Speisepumpe 20, in der die Speisepumpe 20 zusätzlich zu der Hydraulikpumpe 7 als hydraulischer Starter einer Start-Stopp-Funktion zum Starten des Verbrennungsmotors 2 und/oder als Booster-Antrieb zur Unterstützung des laufenden Verbrennungsmotors 2 ausgebildet ist, wird die Speisepumpe 7 an der Saugseite mit Druckmittel aus dem Druckmittelspeicher 25 angetrieben.

Zur Steuerung der Verbindung des Druckmittelspeichers 25 mit der Saugseite der Speisepumpe 20 für den Motorbetrieb der Speisepumpe 20 ist ein zweites elektrisch betätigbares Steuerventil 45 vorgesehen. Das Steuerventil 45 weist eine Sperrstellung 45a und eine Durchflussstellung 45b auf, wobei die Sperrstellung 45a bevorzugt leckagedicht ausgeführt ist mit einem in Richtung zur Speisepumpe 20 sperrenden Sperrventil.

Das weitere Steuerventil 45 ist in einer Verbindungsleitung 46 angeordnet ist, die von der Druckmittelleitung 26 zwischen dem Sperrventil 30 und dem Druckmittelspeicher 25 zu der Ansaugleitung 21 der Speisepumpe 20 geführt ist.

In der von dem Behälter 9 zur Saugseite der Speisepumpe 20 geführten Ansaugleitung 21 ist weiterhin ein in Richtung zum Behälter 9 sperrendes Sperrventil 47 angeordnet, das bevorzugt als ein in Richtung zum Behälter 9 sperrendes Rückschlagventil 48 ausgebildet ist.

Eine elektronische Steuereinrichtung 40 steht eingangsseitig mit dem Drucksensor 34 in Verbindung und dient zur Ansteuerung des Ladeventils 27 sowie des ersten Steuerventils 35 und des zweiten Steuerventils 45.

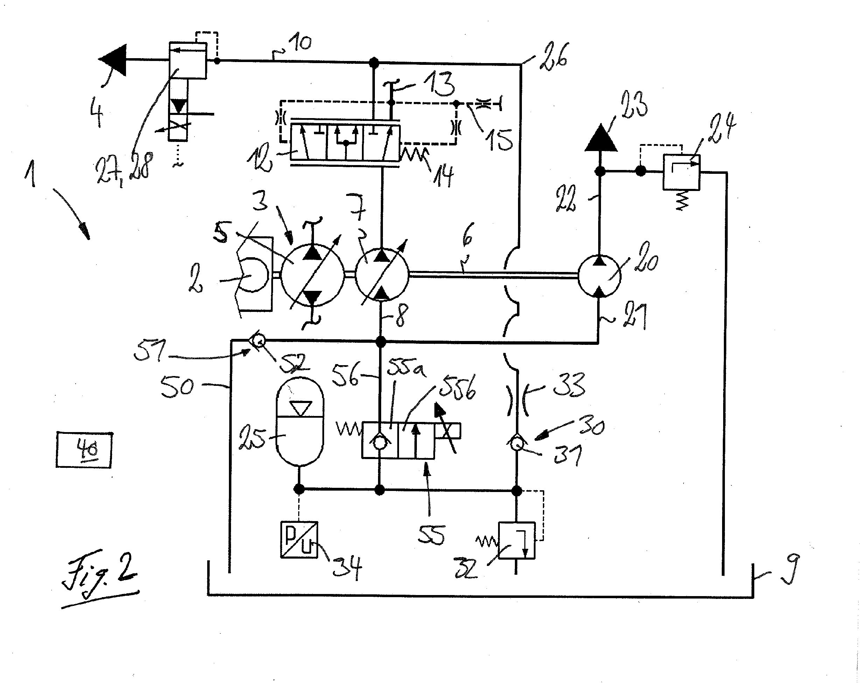

In der Figur 2 ist eine Ausführungsform eines erfindungsgemäßen Antriebsstranges 1 dargestellt, bei dem die Hydraulikpumpe 7 des Arbeitshydrauliksystems 4 und die Speisepumpe 20 einen gemeinsamen Ansaugkanal 50 aufweisen, der die Saugseite und somit die Ansaugleitung 8 der Hydraulikpumpe 7 und die Saugseite und somit die Ansaugleitung 21 der Speisepumpe 20 mit dem Behälter 9 verbindet. In dem gemeinsamen Ansaugkanal 50 ist ein in Richtung zum Behälter sperrendes Sperrventil 51 angeordnet, das bevorzugt als ein in Richtung zum Behälter sperrendes Rückschlagventil 52 ausgebildet ist.

Zur Steuerung der Verbindung der Saugseiten der Hydraulikpumpe 7 und der Speisepumpe 20 für den Motorbetrieb der beiden Triebwerke ist ein gemeinsames elektrisch betätigbares Steuerventil 55 vorgesehen. Das Steuerventil 55 weist eine Sperrstellung 55a und eine Durchflussstellung 55b auf, wobei die Sperrstellung 45a bevorzugt leckagedicht ausgeführt ist mit einem in Richtung zum Ansaugkanal 50 sperrenden Sperrventil. Das Steuerventil 55 ist von der elektronischen Steuereinrichtung 40 betätigbar.

Das gemeinsame Steuerventil 55 ist in einer Verbindungsleitung 56 angeordnet, die von der Druckmittelleitung 26 zwischen dem Sperrventil 30 und dem Druckmittelspeicher 25 zu dem gemeinsamen Ansaugkanal 50 der Hydraulikpumpe 7 und der Speisepumpe 20 geführt ist.

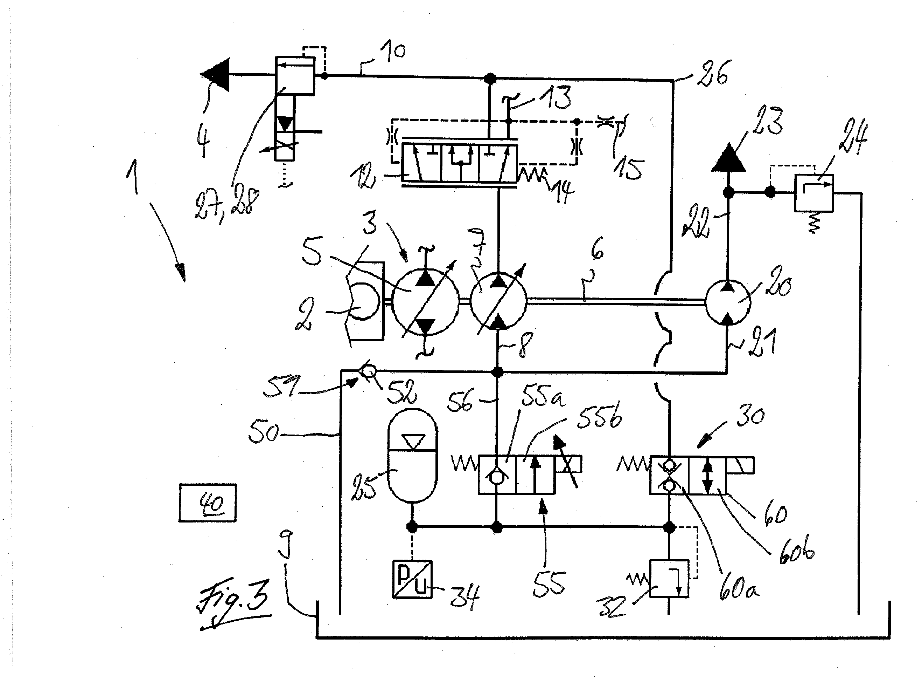

In der Figur 3 ist eine Ausführungsform des erfindungsgemäßen Antriebsstranges 1 dargestellt, bei dem anstelle des in der Druckmittelleitung 26 angeordneten Rückschlagventils 31 und der Drosseleinrichtung 33 das Sperrventil 30 als elektrisch betätigbares Steuerventil 60 mit einer Sperrstellung 60a und einer Durchflussstellung 60b ausgebildet ist. Die Sperrstellung 60a ist bevorzugt in beiden Durchflussrichtungen leckagedicht ausgeführt mit einem in Richtung zum Druckmittelspeicher 25 sperrenden Sperrventil und einem in Richtung zur Förderleitung 10 sperrenden Sperrventil.

Das Steuerventil 60 ist ebenfalls mittels der elektronischen Steuereinrichtung 40 betätigbar.

Die Steuerventile 35, 45, 55 sowie das Steuerventil 60 der Figuren 1 bis 3 können als Schaltventile oder als in Zwischenstellungen drosselnde Proportionalventile ausgebildet sein.

Bei dem erfindungsgemäßen Antriebsstrang 1 der Figuren 1 bis 3 kann der Druckmittelspeicher 25 über die Drosseleinrichtung 33 und das Rückschlagventil 31 (Figuren 1 und 2) bzw. das in die Durchflussstellung 60b betätigte Steuerventil 60 (Figur 3) auf einfache Weise bei einer Betätigung eines Verbrauchers des Arbeitshydrauliksystems 4 mit Druckmittel aufgeladen werden, sofern der Lastdruck des Verbrauchers den Ladedruck des Druckmittelspeichers 25 übersteigt. Zudem kann durch entsprechende Ansteuerung des Ladeventils 27 in eine Drosselstellung der Druckmittelspeicher 25 über die Drosseleinrichtung 33 und das Rückschlagventil 31 bzw. das in die Durchflussstellung 60b betätigte Steuerventil 60 auf einfache Weise in Betriebszuständen aufgeladen werden, in dem der Verbrennungsmotor 2 Leistungsreserven aufweist. Besondere Vorteile ergeben sich, wenn das Ladeventil 27 als Retarderventil 28 ausgeführt ist und im Bremsbetrieb des Fahrzeugs in eine Drosselstellung betätigt wird, da zum Laden des Druckmittelspeichers 25 die kinetische Energie des abbremsenden Fahrzeugs verwendet wird und somit eine Energierückgewinnung erfolgen kann. Beim Abbremsen des Fahrzeugs über den hydrostatischen Fahrantrieb 3 arbeitet die Fahrpumpe 5 als Motor, der die Hydraulikpumpe 7 des Arbeitshydrauliksystems 4 antreibt, so dass über das in Richtung der Drosselstellung angesteuerte Retarderventil 28 der Druckmittelspeicher 25 mit Druckmittel aufgeladen werden kann.

Die Hydraulikpumpe 7 fördert somit bei angesteuerten Verbrauchern des Arbeitshydrauliksystems 4 einen Förderstrom zur Betätigung der Verbraucher des Arbeitshydrauliksystems 4 und dient weiterhin zur Lieferung eines Förderstroms zum Laden des Druckmittelspeichers 25. Zum Laden des Druckmittelspeichers 25 kann die Hydraulikpumpe 7 primärseitig durch die von dem Verbrennungsmotor 2 gelieferte Leistung angetrieben werden. In Verbindung mit dem Retarderventil 28 wird die Hydraulikpumpe 7 zum Laden des Druckmittelspeichers 25 mit der beim Verzögern des Fahrzeugs in einem Bremsbetrieb aufgenommenen kinetischen Energie des Fahrzeugs angetrieben.

Die Hydraulikpumpe 7 des Arbeitshydrauliksystems 4 dient im Motorbetrieb als hydraulischer Starter für den abgestellten Verbrennungsmotor 2, um eine Start-Stopp-Funktion zu erzielen. Hierzu wird bei der Figur 1 bei ausreichendem Druck im Druckmittelspeicher 25 das Steuerventil 35 in die Durchflussstellung 35b betätigt. Das Sperrventil 37 in der Ansaugleitung 8 verhindert ein Abströmen des Druckmittels aus dem Druckmittelspeicher 25 in den Behälter 9. Sobald die Startdrehzahl des Verbrennungsmotors 2 überschritten ist, wozu ein nicht näher dargestellter mit der Steuereinrichtung 40 in Verbindung stehender Drehzahlsensor vorgesehen ist, der dem Verbrennungsmotor 2 bzw. der Abtriebswelle 6 zugeordnet ist, wird das Steuerventil 35 in die Sperrstellung 35a betätigt, um ein weiteres Entleeren des Druckmittelspeichers 25 zu vermeiden.

Bei der Figur 1 kann zum Starten des abgestellten Verbrennungsmotors 2 in einem Motorbetrieb der Hydraulikpumpe 7 durch zusätzliches Betätigen des weiteren Steuerventils 45 in die Durchflussstellung 45b das Drehmoment zum Starten des Verbrennungsmotors 2 durch einen zusätzlichen Motorbetrieb der Speisepumpe 2 erhöht werden. Zudem ist bei der Figur 2 durch die beiden Steuerventile 35, 45 möglich, die Speisepumpe 20 durch alleiniges Betätigen des Steuerventils 45 in die Durchflussstellung 45b allein im Motorbetrieb zu betreiben, um einen Booster-Antrieb durch einen Motorbetrieb der Speisepumpe 20 zu ermöglichen, in dem die Speisepumpe 20 zu dem laufenden Verbrennungsmotor 2 ein zusätzliches, den Verbrennungsmotor 2 unterstützendes Drehmoment in den Antriebsstrang 1 einleitet. Durch den Motorbetrieb der Speisepumpe 20 kann das Beschleunigen des Fahrzeugs durch den Booster-Antrieb und das zusätzliche Drehmoment der Speisepumpe 20 unterstützt werden, indem der Druckmittelspeicher 25 über das Steuerventil 45 zu Beginn des Beschleunigungsvorgangs des Fahrzeugs mit der Speisepumpe 20 verbunden wird. Die Dauer des Boost-Vorgangs kann in Abhängigkeit von dem Ladezustand des Druckmittelspeichers 25 begrenzt werden, der über den Drucksensor 34 erfasst wird. Sofern zum Ende des Beschleunigungsvorgangs des Fahrzeugs in dem Druckmittelspeicher 25 noch ausreichend Druckmittel vorhanden ist, kann auch bei einer stationären Fahrt des Fahrzeugs mit der Zielgeschwindigkeit der Motorbetrieb des Speisepumpe 20 aufrechterhalten werden, um das Moment aus dem Booster-Antrieb der Speisepumpe 20 zu nutzen. Auf dieselbe Weise kann durch den alleinigen Motorbetrieb der Speisepumpe 20 durch das Steuerventil 45 der Verbrennungsmotor 2 bei der Betätigung eines oder mehrere Verbraucher des Arbeitshydrauliksystems 4, wobei die Hydraulikpumpe 7 als Pumpe arbeitet, mit einem Zusatzdrehmoment aus dem Booster-Antrieb der Speisepumpe 20 unterstützt werden.

In den Figuren 2 und 3, wobei von dem gemeinsamen Steuerventil 55 der gemeinsame Motorbetrieb der Hydraulikpumpe 7 und der Speisepumpe 20 gesteuert wird, kann durch den zusätzlichen Motorbetrieb der Speisepumpe 20 in der Durchflussstellung 55b des Steuerventils 55, wobei die Hydraulikpumpe 7 und die Speisepumpe 20 gemeinsam einen hydraulischen Starter für den abgestellten Verbrennungsmotor 2 bilden, um eine Start-Stopp-Funktion zu erzielen, das Drehmoment zum Starten des Verbrennungsmotors 2 auf einfache Weise erhöht werden, um bei geringem Bauaufwand der Hydraulikpumpe 7 ein ausreichendes Drehmoment zum Starten des abgestellten Verbrennungsmotors 2 zur Verfügung zu stellen.

## Patentansprüche

1. Antriebsstrang (1) eines Fahrzeugs, insbesondere einer mobilen Arbeitsmaschine, mit einem Verbrennungsmotor (2) und einem von dem Verbrennungsmotor (2) angetriebenen Arbeitshydrauliksystem (4), wobei das Arbeitshydrauliksystem (4) Arbeitsfunktionen der Arbeitsmaschine umfasst und mindestens eine von dem Verbrennungsmotor (2) angetriebene Hydraulikpumpe (7) aufweist, die als Pumpe und Motor betreibbar ist, wobei die Hydraulikpumpe (7) im Pumpenbetrieb mit einer Saugseite Druckmittel aus einem Behälter (9) ansaugt und in eine zu dem Arbeitshydrauliksystem (4) geführte Förderleitung (10) fördert und wobei der Hydraulikpumpe (7) im Motorbetrieb an der Saugseite Druckmittel aus einem Druckmittelspeicher (25) zuführbar ist, **dadurch gekennzeichnet, dass** der Antriebsstrang (1) eine von dem Verbrennungsmotor (2) angetriebene Speisepumpe (20) aufweist, die einen Speisekreis (23) versorgt, wobei der Speisekreis (23) eine Speisedruckleitung (22) aufweist, an die Verbraucher des Speisekreises (23) angeschlossen sind, wobei die Speisepumpe (20) als Pumpe und Motor betreibbar ist, die im Pumpenbetrieb mit einer Saugseite Druckmittel aus dem Behälter (9) ansaugt und in die zu dem Speisekreis (23) geführte Speisedruckleitung (22) fördert, wobei der Speisepumpe (20) im Motorbetrieb an der Saugseite Druckmittel aus dem Druckmittelspeicher (25) zuführbar ist, wobei zur Steuerung der Verbindung des Druckmittelspeichers (25) mit der Saugseite der Hydraulikpumpe (7) ein erstes elektrisch betätigbares Steuerventil (35) und zur Steuerung der Verbindung des Druckmittelspeichers (25) mit der Saugseite der Speisepumpe (20) ein zweites elektrisch betätigbares Steuerventil (45) vorgesehen ist.

2. Antriebsstrang (1) eines Fahrzeugs, insbesondere einer mobilen Arbeitsmaschine, mit einem Verbrennungsmotor (2) und einem von dem Verbrennungsmotor (2) angetriebenen Arbeitshydrauliksystem (4), wobei das Arbeitshydrauliksystem (4) Arbeitsfunktionen der Arbeitsmaschine umfasst und mindestens eine von dem Verbrennungsmotor (2) angetriebene Hydraulikpumpe (7) aufweist, die als Pumpe und Motor betreibbar ist, wobei die Hydraulikpumpe (7) im Pumpenbetrieb mit einer Saugseite Druckmittel aus einem Behälter (9) ansaugt und in eine zu dem Arbeitshydrauliksystem (4) geführte Förderleitung (10) fördert und wobei der Hydraulikpumpe (7) im Motorbetrieb an der Saugseite Druckmittel aus einem Druckmittelspeicher (25) zuführbar ist, **dadurch gekennzeichnet, dass** der Antriebsstrang (1) eine von dem Verbrennungsmotor (2) angetriebene Speisepumpe (20) aufweist, die einen Speisekreis (23) versorgt, wobei der Speisekreis (23) eine Speisedruckleitung (22) aufweist, an die Verbraucher des Speisekreises (23) angeschlossen sind, wobei die Speisepumpe (20) als Pumpe und Motor betreibbar ist, die im Pumpenbetrieb mit einer Saugseite Druckmittel aus dem Behälter (9) ansaugt und in die zu dem Speisekreis (23) geführte Speisedruckleitung (22) fördert, wobei der Speisepumpe (20) im Motorbetrieb an der Saugseite Druckmittel aus dem Druckmittelspeicher (25) zuführbar ist, wobei zur Steuerung der Verbindung des Druckmittelspeichers (25) mit der Saugseite der Hydraulikpumpe (7) und zur Steuerung der Verbindung des Druckmittelspeichers (25) mit der Saugseite der Speisepumpe (20) ein gemeinsames elektrisch betätigbares Steuerventil (55) vorgesehen ist, das in einer von dem Druckmittelspeicher (25) zu einem gemeinsamen Ansaugkanal (50) der Hydraulikpumpe (7) und der Speisepumpe (20) geführten Verbindungsleitung (56) angeordnet ist, wobei der gemeinsame Ansaugkanal (50) die Saugseite der Hydraulikpumpe (7) und die Saugseite der Speisepumpe (20) mit dem Behälter (9) verbindet.

3. Antriebsstrang nach Anspruch 1 oder 2, **dadurch gekennzeichnet, dass** die Hydraulikpumpe (7) als hydraulischer Starter zum Starten des Verbrennungsmotors (2) bei einer Start-Stopp-Funktion ausgebildet ist.

4. Antriebsstrang nach einem der Ansprüche 1 bis 3, **dadurch gekennzeichnet, dass** die Speisepumpe (20) als hydraulischer Starter zum Starten des Verbrennungsmotors (2) bei einer Start-Stopp-Funktion und/oder als Booster-Antrieb zur Unterstützung des laufenden Verbrennungsmotors (2) ausgebildet ist.

5. Antriebsstrang nach Anspruch 1, **dadurch gekennzeichnet, dass** das erste Steuerventil (35) in einer von dem Druckmittelspeicher (25) zu einer Ansaugleitung (8) der Hydraulikpumpe (7) geführten Verbindungsleitung (36) angeordnet ist, wobei die Ansaugleitung (8) von dem Behälter (9) zur Saugseite der Hydraulikpumpe (7) geführt ist.

6. Antriebsstrang nach Anspruch 5, **dadurch gekennzeichnet, dass** in der von dem Behälter (9) zur Saugseite der Hydraulikpumpe (7) geführten Ansaugleitung (8) ein in Richtung zum Behälter (9) sperrendes Sperrventil (37), insbesondere ein in Richtung zum Behälter sperrendes Rückschlagventil (38), angeordnet ist.

7. Antriebsstrang nach einem der Ansprüche 1, 5 oder 6, **dadurch gekennzeichnet, dass** das zweite Steuerventil (45) in einer von dem Druckmittelspeicher (25) zu einer Ansaugleitung (21) der Speisepumpe (20) geführten Verbindungsleitung (46) angeordnet ist, wobei die Ansaugleitung (21) von dem Behälter (9) zur Saugseite der Speisepumpe (20) geführt ist.

8. Antriebsstrang nach Anspruch 7, **dadurch gekennzeichnet, dass** in der von dem Behälter (9) zur Saugseite der Speisepumpe (20) geführten Ansaugleitung (21) ein in Richtung zum Behälter sperrendes Sperrventil (47), insbesondere ein in Richtung zum Behälter (9) sperrendes Rückschlagventil (48), angeordnet ist.

9. Antriebsstrang nach Anspruch 2, **dadurch gekennzeichnet, dass** in dem gemeinsamen Ansaugkanal (50) ein in Richtung zum Behälter (9) sperrendes Sperrventil (51), insbesondere ein in Richtung zum Behälter (9) sperrendes Rückschlagventil (52), angeordnet ist.

10. Antriebsstrang nach einem der Ansprüche 1 bis 9, **dadurch gekennzeichnet, dass** der Druckmittelspeicher (25) zum Laden an die Förderleitung (10) anschließbar ist, wobei an die zu dem Arbeitshydrauliksystem (4) geführte Förderleitung (10) der Hydraulikpumpe (7) eine zu dem Druckmittelspeicher (25) geführte Druckmittelleitung (26) angeschlossen ist.

11. Antriebsstrang nach Anspruch 10, **dadurch gekennzeichnet, dass** in der Druckmittelleitung (26) ein Sperrventil (30) angeordnet ist.

12. Antriebsstrang nach Anspruch 11, **dadurch gekennzeichnet, dass** das Sperrventil (30) selbsttätig und druckabhängig in Richtung zum Druckmittelspeicher (26) öffnendes Rückschlagventil (31) ausgebildet ist.

13. Antriebsstrang nach einem der Ansprüche 10 bis 12, **dadurch gekennzeichnet, dass** in der Druckmittelleitung (26) eine Drosseleinrichtung (33), insbesondere eine Blende oder Drossel, angeordnet ist.

14. Antriebsstrang nach Anspruch 11, **dadurch gekennzeichnet, dass** das Sperrventil (30) als elektrisch betätigbares Steuerventil (60) mit einer Sperrstellung (60a) und einer Durchflussstellung (60b) ausgebildet ist.

15. Antriebsstrang nach einem der Ansprüche 1 bis 14, **dadurch gekennzeichnet, dass** dem Druckmittelspeicher (25) ein Drucksensor (34) zugeordnet ist.

16. Antriebsstrang nach einem der Ansprüche 1 bis 15, **dadurch gekennzeichnet, dass** in der zu dem Arbeitshydrauliksystem (4) geführten Förderleitung (10) der Hydraulikpumpe (7) ein die Förderleitung (10) drosselndes Ladeventil (27) zum Laden des Druckmittelspeichers (25) angeordnet ist und die Druckmittelleitung (26) stromauf des Ladeventils (27) an die Förderleitung (10) angeschlossen ist.

17. Antriebsstrang nach Anspruch 16, **dadurch gekennzeichnet, dass** das Ladeventil (27) als Retarderventil (28) ausgebildet ist, das im Bremsbetrieb des Fahrzeugs in eine die Förderleitung (10) drosselnde Drosselstellung betätigt ist.

18. Antriebsstrang nach einem der Ansprüche 1 bis 17, **dadurch gekennzeichnet, dass** die Hydraulikpumpe (7) zur Versorgung einer hydraulischen Lenkungsvorrichtung vorgesehen ist und der Förderseite der Hydraulikpumpe (7) ein Prioritätsventil (12) zur bevorzugten Versorgung der Lenkungshydraulik zugeordnet ist, an das ausgangsseitig die Förderleitung (10) des Arbeitshydrauliksystem (4) angeschlossen ist.

19. Antriebsstrang nach einem der Ansprüche 1 bis 17, **dadurch gekennzeichnet, dass** zum Starten des Verbrennungsmotors (2) die Hydraulikpumpe (7) und/oder die Speisepumpe (20) im Motorbetrieb betrieben werden.

20. Antriebsstrang nach einem der Ansprüche 1 bis 19, **dadurch gekennzeichnet, dass** für einen Booster-Antrieb bei laufendem Verbrennungsmotor (2) die Speisepumpe (20) in einem Motorbetrieb betrieben wird.

21. Antriebsstrang nach einem der Ansprüche 1 bis 20, **dadurch gekennzeichnet, dass** die Hydraulikpumpe (7) des Arbeitshydrauliksystems (4) als Konstantpumpe mit einem festen Verdrängervolumen oder als Verstellpumpe mit einem verstellbaren Verdrängervolumen ausgebildet ist.

22. Antriebsstrang nach einem der Ansprüche 1 bis 21, **dadurch gekennzeichnet, dass** die Hydraulikpumpe (7) als Axialkolbenmaschine oder als Radialkolbenmaschine oder als Zahnradmaschine ausgebildet ist.

## Claims

1. Drive train (1) of a vehicle, in particular a mobile work machine, having an internal combustion engine (2) and having a working hydraulics system (4) driven by the internal combustion engine (2), wherein the working hydraulics system (4) comprises work functions of the work machine and has at least one hydraulic pump (7) which is driven by the internal combustion engine (2) and which is operable as a pump and as a motor, wherein, during pump operation, the hydraulic pump (7) draws pressure medium by way of a suction side out of a vessel (9) and conveys said pressure medium into a conveying line (10) that leads to the working hydraulics system (4), and wherein, during motor operation, pressure medium can be supplied to the hydraulic pump (7) at the suction side from a pressure medium accumulator (25), **characterized in that** the drive train (1) has a feed pump (20) which is driven by the internal combustion engine (2) and which provides a supply to a feed circuit (23), wherein the feed circuit (23) has a feed pressure line (22) to which consumers of the feed circuit (23) are connected, wherein the feed pump (20) is operable as a pump and as a motor and, during pump operation, draws pressure medium by way of a suction side out of the vessel (9) and conveys said pressure medium into the feed pressure line (22), which leads to the feed circuit (23), wherein, during motor operation, pressure medium can be supplied to the feed pump (20) at the suction side from the pressure medium accumulator (25), wherein provision is made of a first electrically actuatable control valve (35) for controlling the connection of the pressure medium accumulator (25) to the suction side of the hydraulic pump (7), and of a second electrically actuatable control valve (45) for controlling the connection of the pressure medium accumulator (25) to the suction side of the feed pump (20).

2. Drive train (1) of a vehicle, in particular a mobile work machine, having an internal combustion engine (2) and having a working hydraulics system (4) driven by the internal combustion engine (2), wherein the working hydraulics system (4) comprises work functions of the work machine and has at least one hydraulic pump (7) which is driven by the internal combustion engine (2) and which is operable as a pump and as a motor, wherein, during pump operation, the hydraulic pump (7) draws pressure medium by way of a suction side out of a vessel (9) and conveys said pressure medium into a conveying line (10) that leads to the working hydraulics system (4), and wherein, during motor operation, pressure medium can be supplied to the hydraulic pump (7) at the suction side from a pressure medium accumulator (25), **characterized in that** the drive train (1) has a feed pump (20) which is driven by the internal combustion engine (2) and which provides a supply to a feed circuit (23), wherein the feed circuit (23) has a feed pressure line (22) to which consumers of the feed circuit (23) are connected, wherein the feed pump (20) is operable as a pump and as a motor and, during pump operation, draws pressure medium by way of a suction side out of the vessel (9) and conveys said pressure medium into the feed pressure line (22), which leads to the feed circuit (23), wherein, during motor operation, pressure medium can be supplied to the feed pump (20) at the suction side from the pressure medium accumulator (25), wherein provision is made of a common electrically actuatable control valve (55) for controlling the connection of the pressure medium accumulator (25) to the suction side of the hydraulic pump (7) and for controlling the connection of the pressure medium accumulator (25) to the suction side of the feed pump (20), which common electrically actuatable control valve is arranged in a connecting line (56) that leads from the pressure medium accumulator (25) to a common intake channel (50) of the hydraulic pump (7) and of the feed pump (20), wherein the common intake channel (50) connects the suction side of the hydraulic pump (7) and the suction side of the feed pump (20) to the vessel (9).

3. Drive train according to Claim 1 or 2, **characterized in that** the hydraulic pump (7) is configured as a hydraulic starter for starting the internal combustion engine (2) in the case of a start-stop function.

4. Drive train according to one of Claims 1 to 3, **characterized in that** the feed pump (20) is configured as a hydraulic starter for starting the internal combustion engine (2) in the case of a start-stop function and/or as a booster drive for assisting the running internal combustion engine (2).

5. Drive train according to Claim 1, **characterized in that** the first control valve (35) is arranged in a connecting line (36) that leads from the pressure medium accumulator (25) to an intake line (8) of the hydraulic pump (7), wherein the intake line (8) leads from the vessel (9) to the suction side of the hydraulic pump (7).

6. Drive train according to Claim 5, **characterized in that**, in the intake line (8) that leads from the vessel (9) to the suction side of the hydraulic pump (7), there is arranged a shut-off valve (37) that blocks in the direction of the vessel (9), in particular a check valve (38) that blocks in the direction of the vessel.

7. Drive train according to one of Claims 1, 5 and 6, **characterized in that** the second control valve (45) is arranged in a connecting line (46) that leads from the pressure medium accumulator (25) to an intake line (21) of the feed pump (20), wherein the intake line (21) leads from the vessel (9) to the suction side of the feed pump (20) .

8. Drive train according to Claim 7, **characterized in that**, in the intake line (21) that leads from the vessel (9) to the suction side of the feed pump (20), there is arranged a shut-off valve (47) that blocks in the direction of the vessel, in particular a check valve (48) that blocks in the direction of the vessel (9).

9. Drive train according to Claim 2, **characterized in that**, in the common intake channel (50), there is arranged a shut-off valve (51) that blocks in the direction of the vessel (9), in particular a check valve (52) that blocks in the direction of the vessel (9).

10. Drive train according to one of Claims 1 to 9, **characterized in that**, for the purpose of being charged, the pressure medium accumulator (25) can be connected to the conveying line (10), wherein a pressure medium line (26) that leads to the pressure medium accumulator (25) is connected to the conveying line (10), leading to the working hydraulics system (4), of the hydraulic pump (7).

11. Drive train according to Claim 10, **characterized in that** a shut-off valve (30) is arranged in the pressure medium line (26).

12. Drive train according to Claim 11, **characterized in that** the shut-off valve (30) is configured as a check valve (31) that opens automatically and in a pressure-dependent manner in the direction of the pressure medium accumulator (26).

13. Drive train according to one of Claims 10 to 12, **characterized in that** a throttle device (33), in particular an orifice plate or throttle, is arranged in the pressure medium line (26).

14. Drive train according to Claim 11, **characterized in that** the shut-off valve (30) is configured as an electrically actuatable control valve (60) with a blocking position (60a) and a throughflow position (60b).

15. Drive train according to one of Claims 1 to 14, **characterized in that** the pressure medium accumulator (25) is assigned a pressure sensor (34).

16. Drive train according to one of Claims 1 to 15, **characterized in that**, in the conveying line (10), leading to the working hydraulics system (4), of the hydraulic pump (7), there is arranged a charging valve (27) which throttles the conveying line (10) and which serves for charging of the pressure medium accumulator (25), and the pressure medium line (26) is connected to the conveying line (10) upstream of the charging valve (27) .

17. Drive train according to Claim 16, **characterized in that** the charging valve (27) is configured as a retarder valve (28) which, during braking operation of the vehicle, is actuated into a throttling position in which it throttles the conveying line (10).

18. Drive train according to one of Claims 1 to 17, **characterized in that** the hydraulic pump (7) is provided for providing a supply to a hydraulic steering device, and the conveying side of the hydraulic pump (7) is assigned a priority valve (12) for preferentially providing a supply to the steering hydraulics, to the outlet side of which priority valve the conveying line (10) of the working hydraulics system (4) is connected.

19. Drive train according to one of Claims 1 to 17, **characterized in that**, for starting the internal combustion engine (2), the hydraulic pump (7) and/or the feed pump (20) are operated during motor operation.

20. Drive train according to one of Claims 1 to 19, **characterized in that**, for a booster drive with running internal combustion engine (2), the feed pump (20) is operated during motor operation.

21. Drive train according to one of Claims 1 to 20, **characterized in that** the hydraulic pump (7) of the working hydraulics system (4) is configured as a constant-displacement pump with a fixed displacement volume or as a variable-displacement pump with an adjustable displacement volume.

22. Drive train according to one of Claims 1 to 21, characterized that the hydraulic pump (7) is configured as an axial piston machine or as a radial piston machine or as a gearwheel-type machine.

## Revendications

1. Chaîne cinématique (1) d'un véhicule, notamment d'une machine de travail mobile, comportant un moteur à combustion interne (2) et un système hydraulique de travail (4) entraîné par le moteur à combustion interne (2), le système hydraulique de travail (4) comprenant des fonctions de travail de la machine de travail et présentant au moins une pompe hydraulique (7) entraînée par le moteur à combustion interne (2), laquelle peut fonctionner comme pompe et moteur, la pompe hydraulique (7), lors du fonctionnement comme pompe, aspirant un fluide sous pression hors d'un réservoir (9) par un côté d'aspiration et le refoulant dans une conduite de refoulement (10) guidée jusqu'au système hydraulique de travail (4) et, lors du fonctionnement comme moteur, du fluide sous pression pouvant être acheminé à la pompe hydraulique (7) à partir d'un accumulateur de fluide sous pression (25) sur le côté d'aspiration, **caractérisée en ce que** la chaîne cinématique (1) présente une pompe d'alimentation (20) entraînée par le moteur à combustion interne (2), laquelle alimente un circuit d'alimentation (23), le circuit d'alimentation (23) présentant une conduite sous pression d'alimentation (22) à laquelle sont raccordés les consommateurs du circuit d'alimentation (23), la pompe d'alimentation (20) pouvant fonctionner comme pompe et moteur, laquelle pompe d'alimentation, lors du fonctionnement comme pompe, aspire un fluide sous pression hors du réservoir (9) par un côté d'aspiration et le refoule dans la conduite sous pression d'alimentation (22) guidée jusqu'au circuit d'alimentation (23), et, lors du fonctionnement comme moteur, du fluide sous pression pouvant être acheminé à la pompe d'alimentation (20) à partir de l'accumulateur de fluide sous pression (25) sur le côté d'aspiration, une première soupape de commande (35) pouvant être actionnée électriquement étant prévue pour la commande de la liaison de l'accumulateur de fluide sous pression (25) au côté d'aspiration de la pompe hydraulique (7) et une deuxième soupape de commande (45) pouvant être actionnée électriquement étant prévue pour la commande de la liaison de l'accumulateur de fluide sous pression (25) au côté d'aspiration de la pompe d'alimentation (20) .

2. Chaîne cinématique (1) d'un véhicule, notamment d'une machine de travail mobile, comportant un moteur à combustion interne (2) et un système hydraulique de travail (4) entraîné par le moteur à combustion interne (2), le système hydraulique de travail (4) comprenant des fonctions de travail de la machine de travail et présentant au moins une pompe hydraulique (7) entraînée par le moteur à combustion interne (2), laquelle peut fonctionner comme pompe et moteur, la pompe hydraulique (7), lors du fonctionnement comme pompe, aspirant un fluide sous pression hors d'un réservoir (9) par un côté d'aspiration et le refoulant dans une conduite de refoulement (10) guidée jusqu'au système hydraulique de travail (4) et, lors du fonctionnement comme moteur, du fluide sous pression pouvant être acheminé à la pompe hydraulique (7) à partir d'un accumulateur de fluide sous pression (25) sur le côté d'aspiration, **caractérisée en ce que** la chaîne cinématique (1) présente une pompe d'alimentation (20) entraînée par le moteur à combustion interne (2), laquelle alimente un circuit d'alimentation (23), le circuit d'alimentation (23) présentant une conduite sous pression d'alimentation (22) à laquelle sont raccordés les consommateurs du circuit d'alimentation (23), la pompe d'alimentation (20) pouvant fonctionner comme pompe et moteur, laquelle pompe d'alimentation, lors du fonctionnement comme pompe, aspire un fluide sous pression hors du réservoir (9) par un côté d'aspiration et le refoule dans la conduite sous pression d'alimentation (22) guidée jusqu'au circuit d'alimentation (23), et, lors du fonctionnement comme moteur, du fluide sous pression pouvant être acheminé à la pompe d'alimentation (20) à partir de l'accumulateur de fluide sous pression (25) sur le côté d'aspiration, une soupape de commande (55) commune pouvant être actionnée électriquement étant prévue pour la commande de la liaison de l'accumulateur de fluide sous pression (25) au côté d'aspiration de la pompe hydraulique (7) et pour la commande de la liaison de l'accumulateur de fluide sous pression (25) au côté d'aspiration de la pompe d'alimentation (20), laquelle soupape de commande commune est disposée dans une conduite de liaison (56) guidée à partir de l'accumulateur de fluide sous pression (25) jusqu'à un canal d'aspiration (50) commun de la pompe hydraulique (7) et de la pompe d'alimentation (20), le canal d'aspiration (50) commun reliant le côté d'aspiration de la pompe hydraulique (7) et le côté d'aspiration de la pompe d'alimentation (20) au réservoir (9) .

3. Chaîne cinématique selon la revendication 1 ou 2, **caractérisée en ce que** la pompe hydraulique (7) est réalisée sous forme de démarreur hydraulique servant au démarrage du moteur à combustion interne (2) dans le cas d'une fonction Start-Stop.

4. Chaîne cinématique selon l'une des revendications 1 à 3, **caractérisée en ce que** la pompe d'alimentation (20) est réalisée sous forme de démarreur hydraulique servant au démarrage du moteur à combustion interne (2) dans le cas d'une fonction Start-Stop et/ou sous forme d'entraînement d'appoint servant à assister le moteur à combustion interne (2) en marche.

5. Chaîne cinématique selon la revendication 1, **caractérisée en ce que** la première soupape de commande (35) est disposée dans une conduite de liaison (36) guidée à partir de l'accumulateur de fluide sous pression (25) jusqu'à une conduite d'aspiration (8) de la pompe hydraulique (7), la conduite d'aspiration (8) étant guidée à partir du réservoir (9) jusqu'au côté d'aspiration de la pompe hydraulique (7).

6. Chaîne cinématique selon la revendication 5, **caractérisée en ce qu'**une soupape d'arrêt (37) bloquant en direction du réservoir (9), en particulier une soupape anti-retour (38) bloquant en direction du réservoir, est disposée dans la conduite d'aspiration (8) guidée à partir du réservoir (9) jusqu'au côté d'aspiration de la pompe hydraulique (7).

7. Chaîne cinématique selon l'une des revendications 1, 5 ou 6, **caractérisée en ce que** la deuxième soupape de commande (45) est disposée dans une conduite de liaison (46) guidée à partir de l'accumulateur de fluide sous pression (25) jusqu'à une conduite d'aspiration (21) de la pompe d'alimentation (20), la conduite d'aspiration (21) étant guidée à partir du réservoir (9) jusqu'au côté d'aspiration de la pompe d'alimentation (20).

8. Chaîne cinématique selon la revendication 7, **caractérisée en ce qu'**une soupape d'arrêt (47) bloquant en direction du réservoir, en particulier une soupape anti-retour (48) bloquant en direction du réservoir (9), est disposée dans la conduite d'aspiration (21) guidée à partir du réservoir (9) jusqu'au côté d'aspiration de la pompe d'alimentation (20).

9. Chaîne cinématique selon la revendication 2, **caractérisée en ce qu'**une soupape d'arrêt (51) bloquant en direction du réservoir (9), en particulier une soupape anti-retour (52) bloquant en direction du réservoir (9), est disposée dans le canal d'aspiration (50) commun.

10. Chaîne cinématique selon l'une des revendications 1 à 9, **caractérisée en ce que** l'accumulateur de fluide sous pression (25) peut être raccordé à la conduite de refoulement (10) pour le chargement, une conduite de fluide sous pression (26) guidée jusqu'à l'accumulateur de fluide sous pression (25) étant raccordée à la conduite de refoulement (10) de la pompe hydraulique (7), laquelle conduite de refoulement est guidée jusqu'au système hydraulique de travail (4).

11. Chaîne cinématique selon la revendication 10, **caractérisée en ce qu'**une soupape d'arrêt (30) est disposée dans la conduite de fluide sous pression (26).

12. Chaîne cinématique selon la revendication 11, **caractérisée en ce que** la soupape d'arrêt (30) est réalisée sous forme de soupape anti-retour (31) s'ouvrant automatiquement et en fonction de la pression en direction de l'accumulateur de fluide sous pression (26) .

13. Chaîne cinématique selon l'une des revendications 10 à 12, **caractérisée en ce qu'**un dispositif d'étranglement (33), en particulier un diaphragme ou un étranglement, est disposé dans la conduite de fluide sous pression (26).

14. Chaîne cinématique selon la revendication 11, **caractérisée en ce que** la soupape d'arrêt (30) est réalisée sous forme de soupape de commande (60) pouvant être actionnée électriquement dotée d'une position d'arrêt (60a) et d'une position d'écoulement (60b).

15. Chaîne cinématique selon l'une des revendications 1 à 14, **caractérisée en ce qu'**un capteur de pression (34) est associé à l'accumulateur de fluide sous pression (25) .

16. Chaîne cinématique selon l'une des revendications 1 à 15, **caractérisée en ce qu'**une soupape de charge (27) étranglant la conduite de refoulement (10) et servant au chargement de l'accumulateur de fluide sous pression (25) est disposée dans la conduite de refoulement (10), guidée jusqu'au système hydraulique de travail (4), de la pompe hydraulique (7) et la conduite de fluide sous pression (26) est raccordée à la conduite refoulement (10) en amont de la soupape de charge (27).

17. Chaîne cinématique selon la revendication 16, **caractérisée en ce que** la soupape de charge (27) est réalisée sous forme de soupape retardatrice (28) qui, lors du fonctionnement de freinage du véhicule, est actionnée dans une position d'étranglement étranglant la conduite de refoulement (10).

18. Chaîne cinématique selon l'une des revendications 1 à 17, **caractérisée en ce que** la pompe hydraulique (7) est prévue pour l'alimentation d'un dispositif de direction hydraulique et une soupape de priorité (12) servant à l'alimentation préférée du système hydraulique de direction est associée au côté de refoulement de la pompe hydraulique (7), système hydraulique de direction auquel la conduite de refoulement (10) du système hydraulique de travail (4) est raccordée côté sortie.

19. Chaîne cinématique selon l'une des revendications 1 à 17, **caractérisée en ce que** la pompe hydraulique (7) et/ou la pompe d'alimentation (20) fonctionne(nt) comme moteur pour le démarrage du moteur à combustion interne (2) .

20. Chaîne cinématique selon l'une des revendications 1 à 19, **caractérisée en ce que** pour un entraînement d'appoint lorsque le moteur à combustion interne (2) est en marche, la pompe d'alimentation (20) fonctionne comme moteur.

21. Chaîne cinématique selon l'une des revendications 1 à 20, **caractérisée en ce que** la pompe hydraulique (7) du système hydraulique de travail (4) est réalisée sous forme de pompe à cylindrée constante présentant un volume de refoulement fixe ou sous forme de pompe à cylindrée variable présentant un volume de refoulement réglable.

22. Chaîne cinématique selon l'une des revendications 1 à 21, **caractérisée en ce que** la pompe hydraulique (7) est réalisée sous forme de machine à pistons axiaux ou sous forme de machine à pistons radiaux ou sous forme de machine à engrenages.
